(19) Europäisches Patentamt
European Patent Office
Office européen des brevets

(11) **EP 4 475 463 A1**

(12) **EUROPEAN PATENT APPLICATION**

(43) Date of publication:
**11.12.2024 Bulletin 2024/50**

(21) Application number: **24180878.1**

(22) Date of filing: **07.06.2024**

(51) International Patent Classification (IPC):
**H04B 17/00** (2015.01)　　**H04B 17/21** (2015.01)
**H04B 7/06** (2006.01)　　**H04L 5/00** (2006.01)

(52) Cooperative Patent Classification (CPC):
**H04B 17/0085; H04B 7/0617; H04B 17/221;**
**H04L 1/00; H04L 5/001; H04L 5/0023;**
**H04L 5/1469; H04L 25/0202;** H04B 17/253

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.06.2023 US 202363507336 P**
**06.06.2024 US 202418736370**

(71) Applicant: **Mavenir Systems, Inc.**
**Richardson, TX 75081 (US)**

(72) Inventors:
- **Pisek, Eran**
**Plano, Texas, 75025 (US)**
- **Friedman, Frank**
**Owings Mills, Maryland, 21117 (US)**
- **Mandava, Mahendra**
**Richardson, Texas, 75082 (US)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **METHOD AND APPARATUS FOR PARALLEL PROCESSING MULTI-ANTENNA CALIBRATION**

(57)　A method and system for parallel processing multi-antenna calibration by applying a Hadamard code on top of the network-affected Zadoff-Chu sequence, which allows simultaneous antennas to be AC injected. The Hadamard code that is applied on the parallel injecting multi-antennas converts the ZC sequence to P orthogonal ZC-Hadamard sequences that are decodable and separable from the captured combined sequence.

FIG. 1

**Description**

BACKGROUND

1. Field of the Invention

The present disclosure is related to 5G New Radio (NR) next generation NodeB (gNB) systems supporting a relatively high number of antennas to increase the plurality of the streams and/or increase the joint antenna gain. More particularly, the present disclosure is related to a method to align and equalize the massive Multi-Input Multi-Output (mMIMO) antennas in terms of gain, delay, and phase for both downlink (DL) and Uplink (UL).

2. Description of Related Art

Current 5G New Radio (NR) next generation NodeB (gNB) systems support high number of antennas to increase the plurality of the streams and/or increase the joint antenna gain by applying digital/analog/hybrid beamforming to simultaneously address multiple User Equipment (UE) locating in different trajectories to the gNB. The increased number of antennas per gNB and per sector is often called massive Multi-Input Multi-Output (mMIMO) and can be as high as 32 and 64 antennas (or an even higher number of antennas) per gNB and per sector.

These mMIMO antennas need to jointly work to achieve an optimized transmission and reception by forming one or multiple beams simultaneously projecting or receiving to or from different directions, as well as nulling different directions. Each antenna can be driven by a separate and dedicated baseband and an RF circuit. Separate baseband and especially RF circuits cause imbalanced antennas. The imbalance can be expressed in different gain, delay, and phase and different radio frequency (RF) and temperature conditions. The imbalance can cause a degradation in the joint antenna beam gain performance and increase the muti-beam interference once multiple antennas are combined while transmitting to or receiving from one or multiple UEs, respectively. The main challenge is to align and equalize the mMIMO antennas in terms of gain, delay, and phase for both Downlink (DL) and Uplink (UL).

Emerging 4G and 5G NR cellular systems constantly improve the Signal-to-Noise Ratio (SNR) at the receivers on both gNB and UE sides, and thus throughput performance on both sides, reaching longer distances and more UEs with much higher data rates. One of the main methods to increase the SNR performance improvement is achieved by using multiple antennas in the gNB. For many years the multi-antennas in the base-station (BTS) were used to increase the throughput by using parallel streams to and from a single UE (and vice versa). This method was called Multiple-In Multiple-Out (MIMO). Over the years there were different precoding methods proposed and employed in both the cellular and Wi-Fi standards (e.g., using codebooks, etc.). Over the years multiple antennas were used to form a beam. The beams were formed digitally by aligning their phases in a way that the amplitude at the UE will be constructively added, increasing the gain (e.g., doubling the amplitude at the receiver input with 6dB gain is achieved by doubling the number of the antennas used in the beamforming). The beam can be formed using Channel State Information (CSI) either received from the UE side or through using channel reciprocity. A more advanced MIMO method for increasing the plurality of the spatial beams is through massive MIMO (mMIMO). As its name suggests, mMIMO significantly increases the number of antennas used to create multiple MIMO beams reaching one or more UEs simultaneously, reusing the same time and frequency, but separated by space. In addition to the use of polarization (e.g., vertical/horizontal, or left/right circular), the mMIMO beams can be formed in the same polarization space. Hence, multiple mMIMO beams can be formed in each polarization separately. The number of antennas per mMIMO can be anything from 8 to 64 antennas and above.

Based on the above, a significant challenge is the alignment of the multiple antennas to form the beam. Maximum beam alignment is achieved by aligning three parameters: Gain, Delay, and Phase. Hence, prior to forming the beam by a plurality of antennas for any direction, each antenna needs to be equalized to the other antennas through the Gain, Delay, and Phase criteria. The process is typically divided into two main steps:

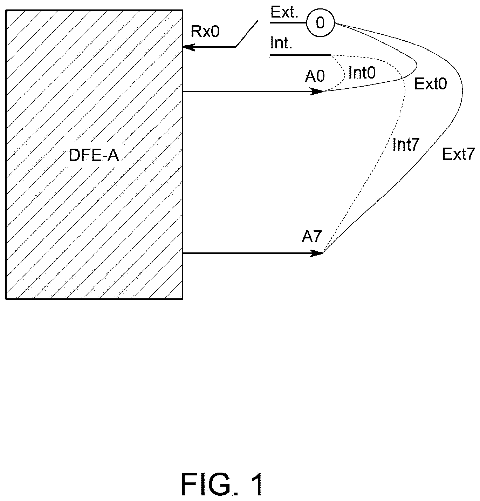

1) **Factory Calibration.** The first step to align the antennas is to create a method to measure the three parameters for each antenna in a way that they can be referenced to the same gain, delay, and phase values at different RF and temperature conditions. One of the ways to achieve the reference is through conductive connection by combining all the antenna paths (transmitter and receiver) to a single receiving point on the Radio Unit (RU) board. This receiving point is used as the measurement reference point on the RU board for all the antennas. However, routing all the antennas into a single receiving point requires combing the antennas and routing them. Each route from each antenna bears a different Gain, Delay, and Phase by itself (namely Internal Coupling Network), which also needs to be calibrated. Hence, one of the methods to obtain the internal coupling network gain, delay, and phase is by using a pre-calibrated external coupling network that is installed in the RU board's factory connecting and combining all the transmitter outputs to a single connector that is connected to one of the receivers. FIG. 1 illustrates a Factory Calibration method described above with all the variables being phase offsets for the various paths according to the prior art.

FIG. 1 provides the mathematical derivation of the internal coupling network phase using the factory calibration using an external coupling network. Both internal and external coupling networks are connected to the same receiving point through a switch that selects between the networks. This method provides an example of deriving the relative internal coupling network phase between antenna 7 and antenna 0. Another method to obtain the internal coupling network parameters is using a Vector Network Analyzer (VNA). However, using a VNA in the factory may be difficult due to the complexity of the setup and the excessive cost and execution time. The internal coupling network parameters are also RF band dependent, hence, the factory calibration should cover all the frequency bands of the product. Hence, performing factory calibration can be time-consuming for the factory, especially when there are hundreds or thousands of RU boards to calibrate, which will lead to higher manufacturing costs and slower rollout.

**2) Run-time Calibration.** Once the internal coupling network parameters are derived by the factory calibration method, the system can use the internal coupling network values to align the antennas while in operation in the field. There is also a need to constantly update the antenna calibration parameters every few minutes/seconds since the Transmit (Tx) and Receive (Rx) Radio Frequency (RF) chain parameters are also dependent on temperature and the change of the RF components characteristics.

In most systems, the AC parameters are obtained through injecting a unique sequence through the Tx and Rx chain for Tx Calibration and Rx Calibration respectively. These can be captured and correlated with the injected sequence to obtain the Tx/Rx chain Gain, Delay and Phase parameters. In some cases, the selected injecting sequence is based on Zadoff-Chu (ZC) sequence whose length is optimized to the system Band Width (BW) (e.g., 50MHz, 100MHz, etc.). Due to the nature of the run-time antenna calibration process, there is a need to inject and capture ZC sequences from the Tx path to the Rx path. The process needs to be executed during a quiet time where neither signal transmission nor signal reception is performed. In 5G-NR Time Division Duplex (TDD) systems, there is such a quiet time when the system switches between the DL and UL slots. The quiet time is called the Guard Period (GP) and it lasts for a few symbols.

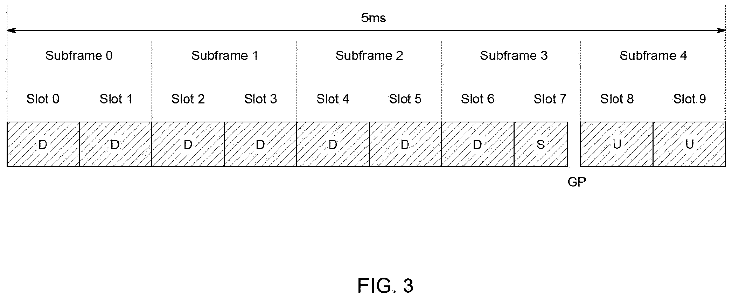

5G NR Frame Format for Sub-Carrier Spacing (SCS) of 30 KHz ($\mu$ =1) is illustrated in FIG. 3 where the AC inject, and capture is executed only during the Guard Period every 5ms. Accordingly, to obtain the Antenna Calibration parameters for N number of antennas of a system whose Instantaneous Bandwidth (IBW) = 400MHz and Occupied Bandwidth (OBW) = 100MHz, the system must perform: Factory Calibration and Run-Time Calibration.

**Factory Calibration.** The complexity required to obtain the internal coupling network parameters over the full IBW is:

$$S_{FC} = 2 \left\lceil \frac{IBW}{OBW} \right\rceil NI$$

Where *I* is number of Iterations for averaging and 2 is for internal and external tests. On a typical laptop it takes more than 10 minutes to perform all internal and external tests with N = 32 antennas and I = 5.

**Run-Time Calibration.** The complexity required to perform the Tx/Rx AC Inject/Capture is:

$$S_{RC} = 2CNI$$

Where C is the number of Carrier Components (CCs). Due to the restriction that the AC Inject/Capture can only happen during the GP, it means that it takes $2 \times 32 \times 5 \times 5$ ms = 1.6 seconds to conduct the AC over all 32 antennas with 5 iterations for averaging assuming C = 1. The calculated time of 1.6 seconds is best case assuming the software (SW) can be processed as fast as the frame of 5ms per antenna. However, based on the Factory Calibration time, it would take 10 minutes / 4 = 2.5 minutes to finish one round of Run-Time Calibration and for C = 1. For C > 1, the AC processing time increases by a factor C.

The main problem in the case of the Factory Calibration is the RU board manufacturing and validation time is very expensive, and 10 minutes for AC processing of a single RU board is too time and cost intensive. In the case of the Run-time Calibration, a round time of about 2.5 minutes is too long for the Antenna Calibration parameters to stay coherent due to temperature changes that require an AC update at about 10 second intervals. In addition, increasing the number of CCs (C > 1) and antennas will linearly increase both complexities and times.

Currently there are two options to accelerate the AC processing time, which are: Reduced Iterations and Orthogonal ZC Sequences.

**Reduced Iterations.** To accelerate the AC processing time, current systems reduce the number of iterations executed to average the AC parameters (Gain, Delay, and Phase).

**Orthogonal ZC Sequences.** Each antenna is assigned with an orthogonal ZC sequence so they can be simultaneously transmitted. However, in that case, only one value per OBW per AC parameter can be derived. Based on further AC tests, it is recognized that more than one gain and phase value need to be used per OBW.

Both workarounds lead to reduced performance and reduced accuracy in deriving the AC parameters. The reduced performance leads to gain degradation in the joint mMIMO beams and to increased interference between the constructed antenna beams (namely Layers).

Accordingly, there is a need for a system and method to align and equalize mMIMO antennas in terms of gain, delay, and phase for both downlink (DL) and Uplink (UL) that overcome, alleviate, and/or mitigate one or more of the aforementioned and other deleterious effects of prior art.

SUMMARY

Accordingly, what is needed is a system and method for supporting a relatively high number of antennas in a 5G New Radio (NR) next generation NodeB (gNB) system to increase the plurality of the streams and/or increase the joint antenna gain.

It is further desired to provide a system and method for reducing the time needed for gain, delay and phase equalization and alignment in mMIMO antennas used in a 5G NR gNB system.

It is still further desired to provide a system and method for parallel injection of multi-antennas used in a 5G NR gNB system.

It is also desired to provide a system and method allowing simultaneous AC injection of mMIMO antennas used in a 5G NR gNB system.

It is yet further desired to provide a system and method enabling an antenna calibration process that is faster than current processes with the same number of antennas, iterations, and Carrier Components.

Accordingly, a method is provided that reduces time needed for the gain, delay and phase equalization and alignment process time to cover all the antennas. The antennas alignment comprises two main steps: 1) Factory Calibration; and 2) Run-time Calibration. The proposed Parallel-Processing Multi-Antenna Calibration (PPMAC) method significantly reduces the calibration time in both steps thereby increasing the calibration accuracy and improving the joint gain and beam separation to reduce interferences between the beams.

The PPMAC method applies a Hadamard code on top of the ZC sequence, which allows simultaneous antennas to be AC injected. The level of parallelism of the injecting antennas is dependent on the Hadamard code size (P). The Hadamard code that is applied on the parallel injecting multi-antennas converts the ZC sequence to P orthogonal ZC-Hadamard sequences that are decodable and separable from the captured combined sequence.

In the following invention description, an example is given with 32 antennas RU, which is divided into four 8-antenna Digital Front-End Units (namely DFEs) with the parallelism level P = 4.

Each of the four DFE FPGAs (named A, B, C and D) contains an Antenna Calibration block that injects a Zadoff-Chu sequence from its internal memory to be transmitted into the calibration feedback network. The calibration network returns the waveform back into a designated receiver port. The Antenna Calibration block can then capture this calibration waveform after a programmed delay and make the captured contents available to SW for post-processing to determine the phase offsets between the various antenna ports in both the transmit and receive directions.

The calibration of all 32 antenna ports is performed periodically in both the Tx and Rx direction. Each calibration cycle performs an injection and capture during the TDD guard period between Tx and Rx on one port per DFE FPGA in the Tx or Rx direction (4 of the 32 ports simultaneously). This means that the calibration process needs to perform a total of at least 16 cycles, 8 in the Tx direction and 8 in the Rx direction for each CC. Note that every guard period is not used for calibration if the resources can't be made available, implying that the number of cycles can exceed 16. For example, if there are three CCs allocated in the occupied BW then the entire calibration process will take a minimum of 48 airframes. Because the SW is requesting calibration cycles asynchronous to the airframe timing it is possible that an airframe could go by without a calibration cycle being performed.

The overall calibration process is managed by the Fronthaul FPGA, which can send and receive messages and the compensated values over the inter-FPGA Ethernet connection to the DFE FPGAs.

Overall, the proposed method significantly reduces the AC inject/capture processing time by a factor of P.

For this application the following terms and definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term g NodeB (gNB) as used herein is the radio base station in 5G NR networks. These radio base stations (nodes) are the cell towers mobile operators use to connect mobile phones.

User Equipment (UE) refers to the end-user device that connects to a wireless network to access various services and applications.

The term massive Multi-Input Multi-Output (mMIMO) as used herein means a wireless communications technology in which base stations are equipped with a very large number of antenna elements to improve spectral and energy efficiency.

The term Downlink (DL) as used herein means data flow towards the radiating antenna.

The term Uplink (UL) as used herein means data flow away from the radiating antenna.

The term "Zadoff-Chu sequence" as used herein means a mathematical sequence which, when applied to a signal, generates a new signal having the feature of being a constant amplitude zero autocorrelation (CAZAC) waveform. A Zadoff-Chu sequence is generated by two parameters: R which is the root sequence and N which is the sequence length, and it is calculated as follows:

$$x(m) = exp(-j \cdot \pi \cdot R \cdot m \cdot (m+1)/N), \text{ for } m = 0, ..., N-1$$

In one configuration method for Parallel-Processing Multi-Antenna Calibration (PPMAC) for massive Multi-Input Multi-Output (mMIMO) antennas in a 5G New Radio (NR) next generation NodeB (gNB) system is provided, the method comprising the steps of providing a plurality of digital front-end units (DFEs), each of the plurality of DFEs includes an antenna calibration block having an internal memory and a plurality of associated antennas used in a 5G NR gNB, each antenna connected to a port, and connecting each of the plurality of DFEs in parallel with each other. The method further comprises the steps where each of the antenna calibration blocks injects a Zadoff-Chu (ZC) sequence from the calibration blocks internal memory into respective waveforms in a calibration feedback network to form ZC sequences, and the calibration feedback network returns the ZC sequences to a designated receiver port. The method still further comprises the steps of capturing the ZC sequences with the calibration block in one or more of the plurality of DFEs after a programmed delay, and determining phase offsets between antenna ports in both the transmit (Tx) and receive (Rx) directions based on the ZC sequences.

The above-described and other features and advantages of the present disclosure will be appreciated and understood by those skilled in the art from the following detailed description, drawings, and appended claims.

DESCRIPTION OF THE DRAWINGS

FIG. 1 illustrates the RU factory calibration method.

FIG. 2 illustrates an antenna calibration block diagram.

FIG. 3 illustrates 5G NR TDD SCS = 30KHz Frame Format.

FIG. 4 is a block diagram of Multi-DFE Tx Antenna Calibration according to one configuration of the present invention.

FIG. 5 is an illustration of Multi-DFE Tx Antenna Calibration 100MHz (3276 SCs) Frequency-Domain 4x4 Hadamard-Multiplied ZC Mapping according to the configuration of FIG. 4.

FIG. 6A-6G shows an embodiment of Multi-DFE Tx Antenna Calibration ZF Channel Estimation with 4x Interpolation according to the configuration of FIG. 4.

FIG. 7A-7G shows an embodiment of Multi-DFE Tx Antenna Calibration ZF Channel Estimation with 4x Interpolation according to the configuration of FIG. 4.

FIG. 8 is an illustration of Multi-DFE Tx Antenna Calibration 100MHz (3276 SCs) Frequency-Domain Interlaced ZC Sequence according to the configuration of FIG. 4.

FIG. 9 is a block diagram of control for Antenna Calibration Multi-DFE according to the configuration of FIG. 4.

FIG. 10 is a block diagram of timing for Multi-DFE Tx Antenna Calibration according to the configuration of FIG. 4.

FIG. 11 is a block diagram for Multi-DFE Rx Antenna Calibration according to the configuration of FIG. 4.

FIG. 12 is a block diagram of timing for Multi-DFE Rx Antenna Calibration according to the configuration of FIG. 4.

FIG. 13 is a block diagram of Arbitration Diagram according to the configuration of FIG. 4.

DETAILED DESCRIPTION

Referring now to the drawings, wherein like reference numerals designate corresponding structure throughout the views. The drawings provide a full description of the invention using an example of P = 4 Digital Front-End (DFE) units, each supporting 8 antennas.

FIG. 1 provides the mathematical derivation of the internal coupling network phase using the factory calibration using an external coupling network. Both internal and external coupling networks are connected to the same receiving point through a switch that selects between the networks. This method provides an example of deriving the relative internal coupling network phase between antenna 7 and antenna 0. Another method to obtain the internal coupling network parameters is using a Vector Network Analyzer (VNA). The internal coupling network parameters are also RF band dependent, hence, the factory calibration should cover all the frequency bands of the product.

$$A7e = A7 + Ext7$$

$$A0e = A0 + Ext0$$

$$A7i = A7 + Int7$$

$$A0i = A0 + Int0$$

$$A7 = A7e - Ext7$$

$$A0 = A0 - Ext0$$

$$Int7 = A7i - A7 = A7i - A7e + Ext7$$

$$Int0 = A0i - A0 = A0i - A0e + Ext0$$

$$Int7r = Int7 - Int0$$

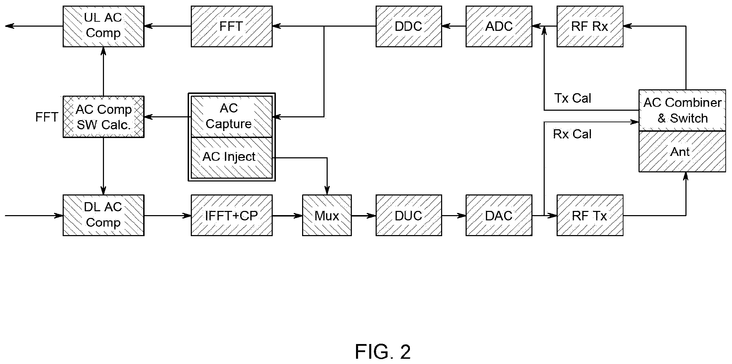

FIG. 2 describes an antenna calibration block diagram as added to a conventional Orthogonal Frequency-Division Multiplexing (OFDM) based communication system. The dashed blocks (blue) illustrate the known parts of the OFDM system, while the solid (green) blocks represent one configuration of the present invention improving the OFDM system. It should be noted that FIG. 2 only shows one Tx/Rx - chain out of all mMIMO antenna chains (e.g., 32 chains).

The antenna's calibration process is divided into two parts: 1) Antenna Calibration (AC) Parameters Estimation: Processed by the AC Inject/Capture block and software (SW); and 2) AC Compensation: Processed by the AC Comp block and SW.

FIG. 3 describes the 5G NR Frame Format for Sub-Carrier Spacing (SCS) of 30 KHz ($\mu$ =1). The AC inject and capture is executed only during the Guard Period every 5ms. Hence, to obtain the Antenna Calibration parameters for N number of antennas of a system whose Instantaneous Bandwidth (IBW) = 400MHz and Occupied Bandwidth (OBW) = 100MHz, the system must perform: Factory Calibration and Run-Time Calibration.

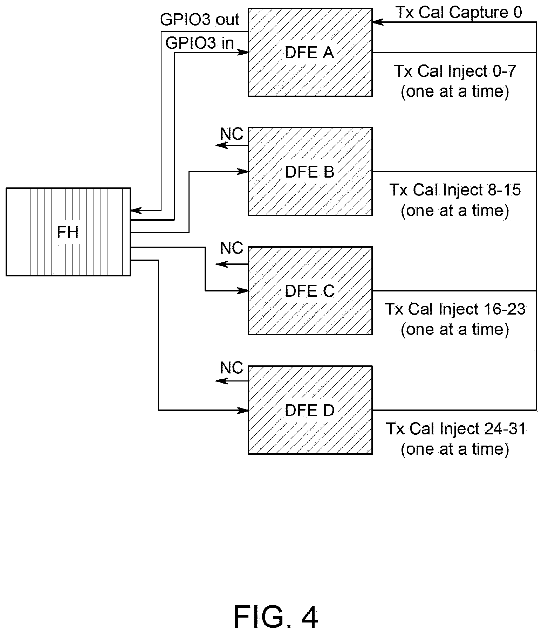

Referring to FIG. 4, it is shown that all the four DFE field programmable gate arrays (FPGAs) are connected to the front haul general purpose input output (FH GPIO) signals where a GPIO 3 output of DFE-A is connected to a FH DFE-A GPIO 3 input, and all the GPIO 3 inputs of the DFE FPGAs are connected to the four GPIO 3 outputs of the FH FPGA, one to each DFE FPGA. Also, it is shown in FIG. 4 that the Tx antenna calibration is performed simultaneously by all DFE FPGAs where it is guaranteed that all the DFE FPGAs are TDD aligned. The Tx Cal antenna scheduling will be done four antennas at a time, one from each DFE FPGA. The set will be as follows (but not limited to):

1. Set 1 - Antennas 0, 8, 16, 24
2. Set 2 - Antennas 1, 9, 17, 25
3. Set 3 - Antennas 2, 10, 18, 26
4. Set 4 - Antennas 3, 11, 19, 27
5. Set 5 - Antennas 4, 12, 20, 28
6. Set 6 - Antennas 5, 13, 21, 29
7. Set 7 - Antennas 6, 14, 22, 30
8. Set 8 - Antennas 7, 15, 23, 31

Therefore, the Tx calibration process should be completed after at least 8 sessions, where at most 4 antennas are processed at each session. To process 4 antennas in parallel per session, the SW needs to differentiate the four antenna channels from the captured signal, that is a linear combination of the four ZC sequences each arriving from a different antenna. To simplify the implementation, it is assumed that the Tx Antenna channel can be measured at every 4th SC (4x30KHz = 120KHz). The intermediate 3 SCs can be extrapolated from the captured ZC sequence applied every 4th SC.

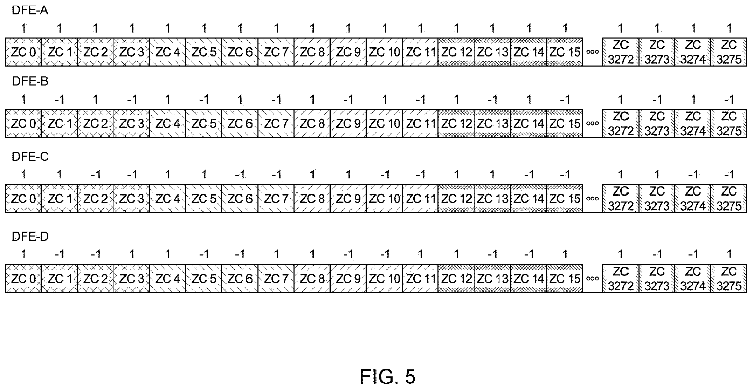

FIG. 5 describes the method to apply the same ZC sequence to all four DFEs. As can be seen, each DFE FPGA applies the same ZC sequence. The ZC sequence length is the same as the original single antenna ZC sequence. For example, a 100MHz BW has 273 RBs which is 3276 SCs. Hence, the multi-DFE ZC sequence length is also 3276 samples in frequency-domain (FD). The 3276-length ZC sequence is applied to all the DFE FPGAs. This method would not be enough to separate the antennas in frequency-domain since the ZC is duplicated across the antennas, however, a 4x4 Hadamard matrix is applied to the 4 shifted ZC sequences. The 4 new ZC sequences are then converted to Time-Domain in SW and saved in the corresponding AC Inject/Capture blocks. Accordingly, the term "Hadamard matrix" as used herein applies to a 4x4 matrix that is repeated 3276/4 = 819 times (creating a 4x3276 matrix), and then the ZC sequence for each DFE which is of length of 3276 is multiplied (each ZC element is multiplied by the corresponding repeated Hadamard element creating 3276 results) different 819x4=3276 row (or column for 3276x4 matrix repetition, the code is row/column symmetric).

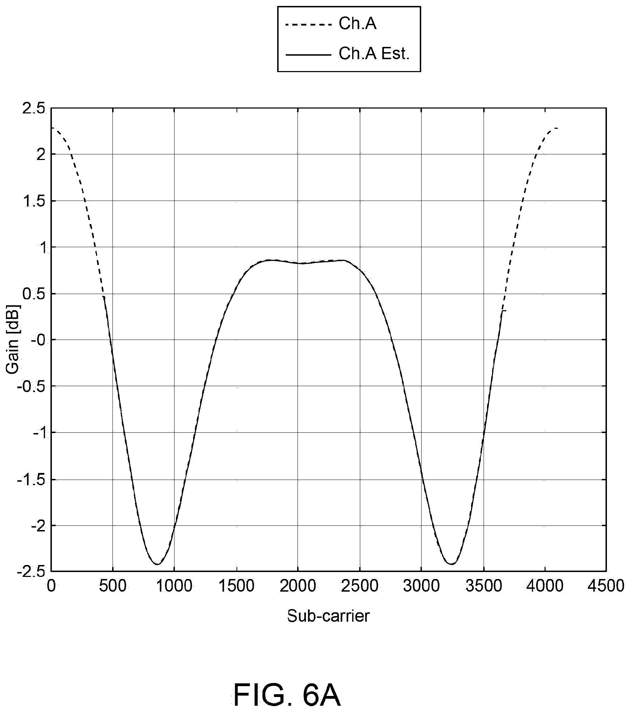

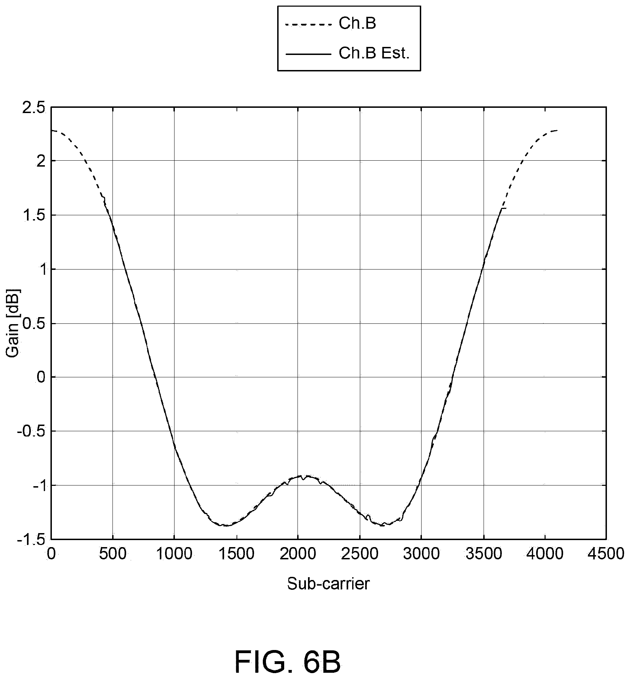

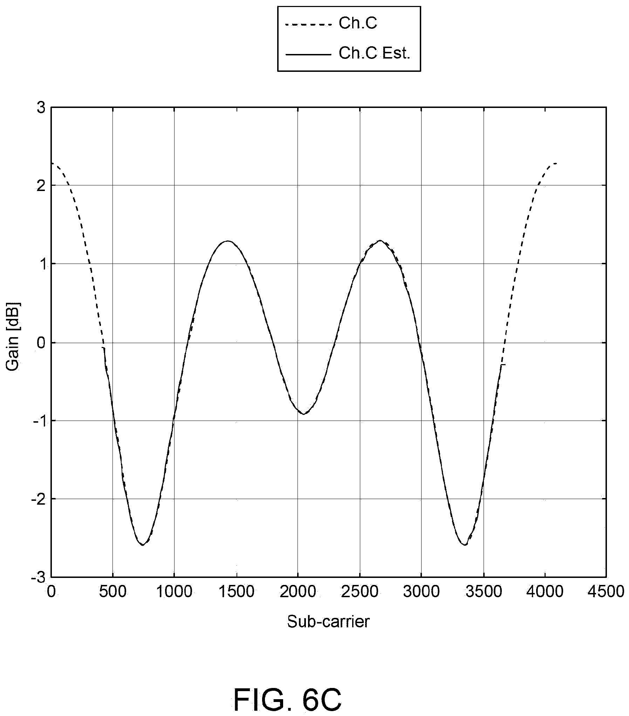

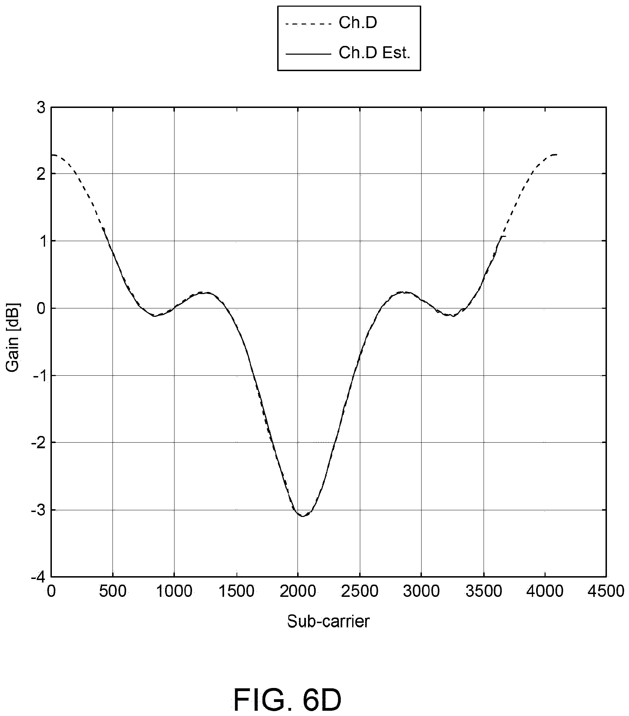

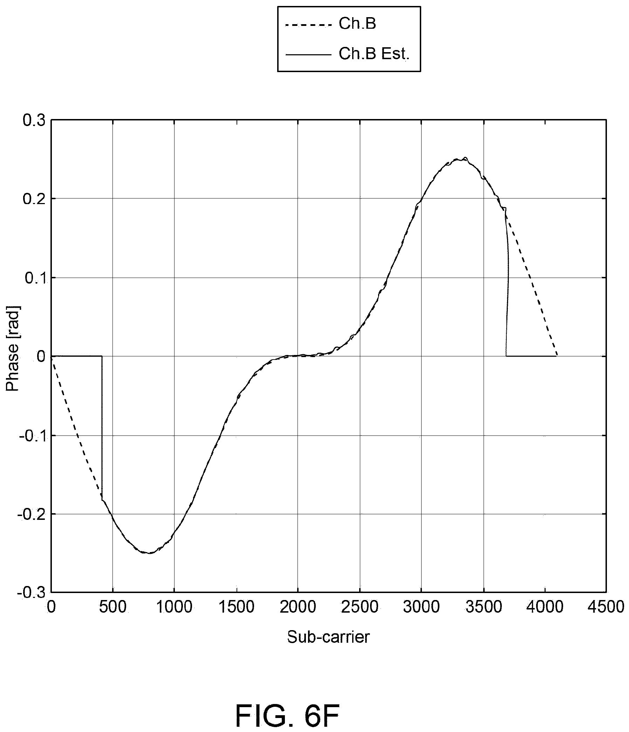

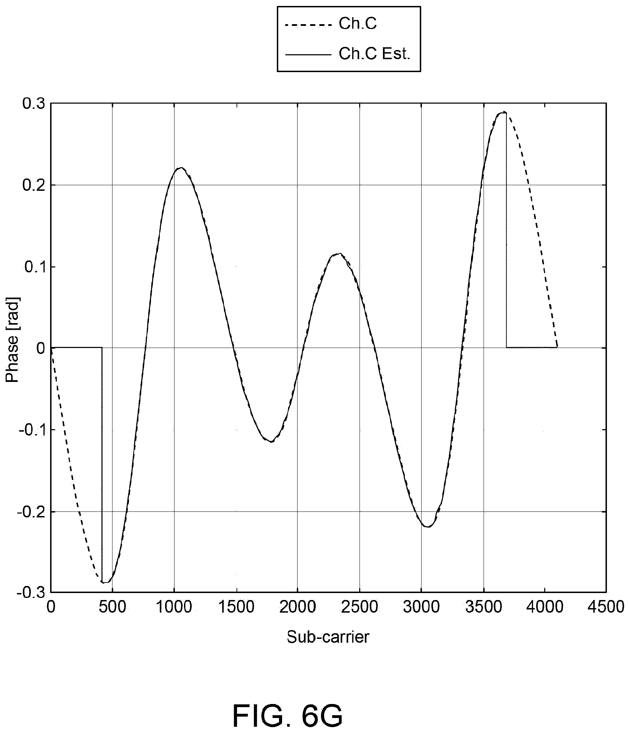

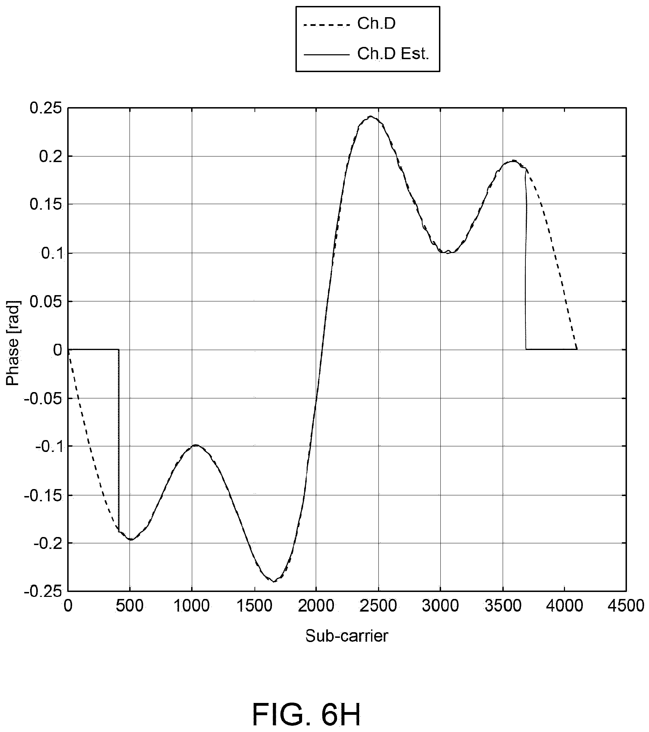

FIGS. 6A-6D describe the performance of the Zero-Force (ZF) channel estimation for the Tx antenna calibration method provided in FIG. 5. Due to the nature of the 4x4 Hadamard code, the channel estimation is calculated every 4 SCs. Hence, 4x interpolation is recommended to extrapolate the channel estimation to support all the BW SCs.

$$P = 4, \; K = 4096 \; (3276), \; T = \frac{K}{P}, \; S = Channel, \; N = Noise$$

$$H = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

**Tx (p) Sequence:**

$$\hat{S}_d(p, t) = M_{ZC}^{-1}(t) R_{CM}(tP + p)$$

$$Z_{CP}(p, k) = h(p, mod(k, P)) Z_c(k)$$

**At Rx 0:**

$$R_{ZC}(k) = \sum_{p=0}^{P-1} Z_{CP}(p, k) S(p, k) + N(k)$$

**ZF Example:**

$$\hat{S}_d(p, t) = M_{ZC}^{-1}(t) R_{CM}(tP + p)$$

**Optional:** $\hat{S} = \uparrow P (\hat{S}_d)$

Example for P = 4

$$M'_{zc}(t) = \begin{bmatrix} Z_{CP}(0, tP) & Z_{CP}(0, tP + 1) & Z_{CP}(0, tP + 2) & Z_{CP}(0, tP + 3) \\ Z_{CP}(1, tP) & Z_{CP}(1, tP + 1) & Z_{CP}(1, tP + 2) & Z_{CP}(1, tP + 3) \\ Z_{CP}(2, tP) & Z_{CP}(2, tP + 1) & Z_{CP}(2, tP + 2) & Z_{CP}(2, tP + 3) \\ Z_{CP}(3, tP) & Z_{CP}(3, tP + 1) & Z_{CP}(3, tP + 2) & Z_{CP}(3, tP + 3) \end{bmatrix}$$

For FIGS. 6A-6D
Time domain channel components (Random):

    cha = [1;0;0.2;0.1;0]
    chb = [1;0.2;0.1;0;0]
    chc = [1;0;0.1;0.2;0]
    chd = [1;0.2;0;0.1;0]

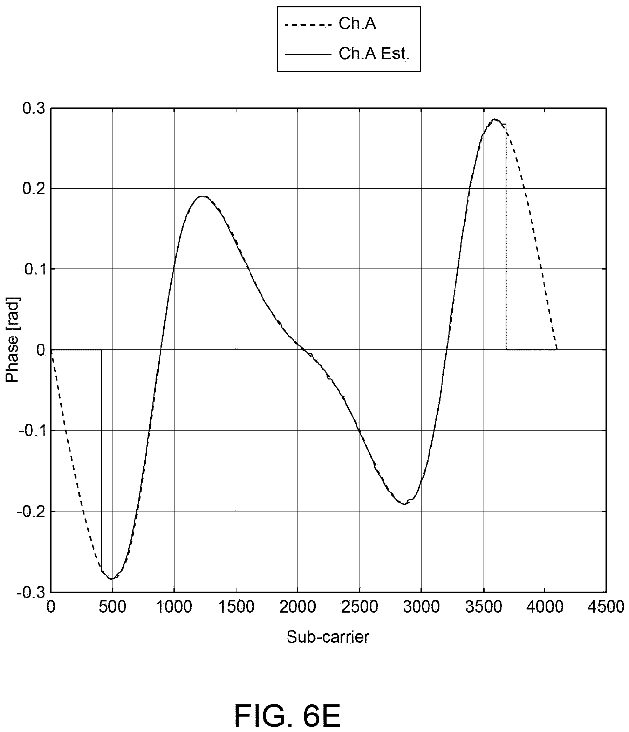

In addition, a smoothing function (f) is recommended to be applied on the output of each antenna calibration channel estimation to reduce the noise component contribution and increase the quality and accuracy of the channel estimation of the four antennas in the set as can be seen in FIGS. 6E-6H. A smoothing method usually comprises of some kind of curve-fitting algorithm. One example of a curve-fitting function is a linear curve-fitting which linearizes the channel estimation into a first-order estimation which only includes the average and the slope information either for each part of the bandwidth (the bandwidth can be segmented for this purpose) or for the whole bandwidth as a one part. Another algorithm which is more general is using a comb filter. The length of the comb filter determines the accuracy level of tracking the original channel estimation vs. the noise attenuation. The channel estimation plots in FIGS. 6E-6H example are smoothed by a comb filter length of 32 taps. Special attention needs to be given to the bandwidth edges, where the comb filter does not have either initial or tailing values. In the example in 6A-6D, the initial and tailing values are merely repetitions of the first and last channel estimation outputs, respectively.

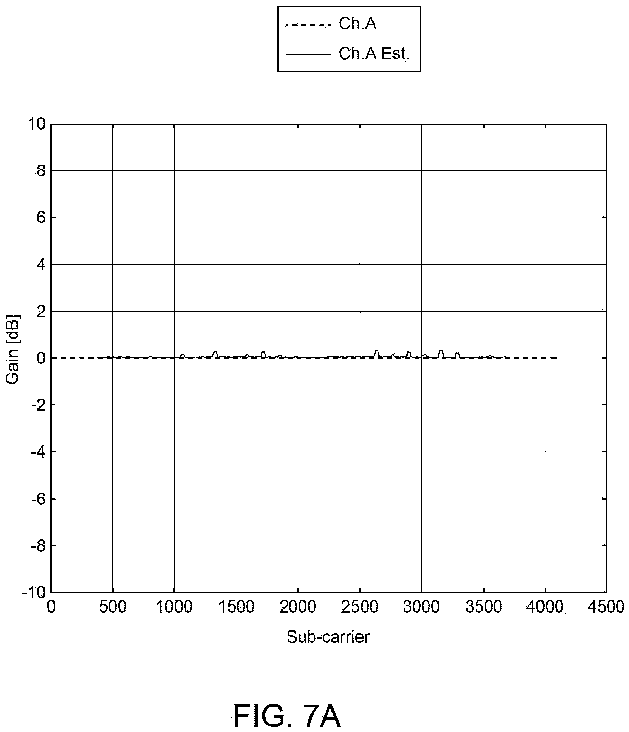

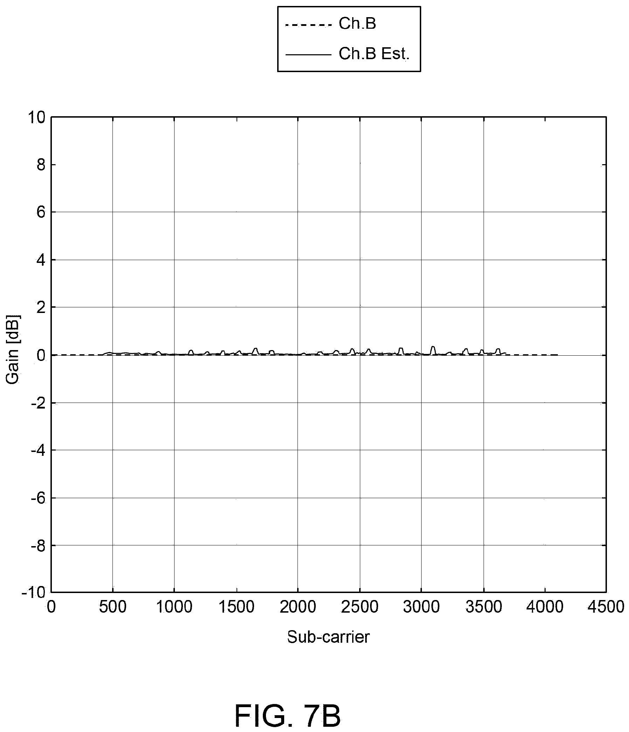

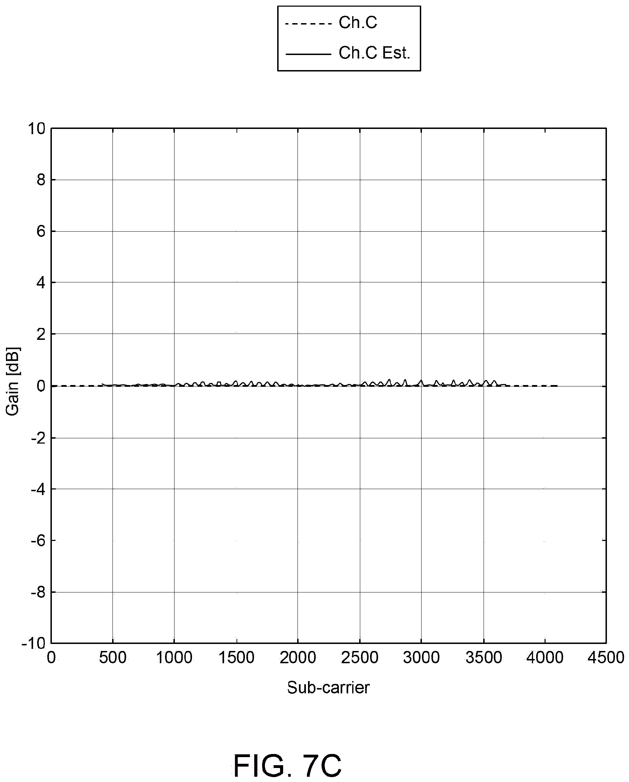

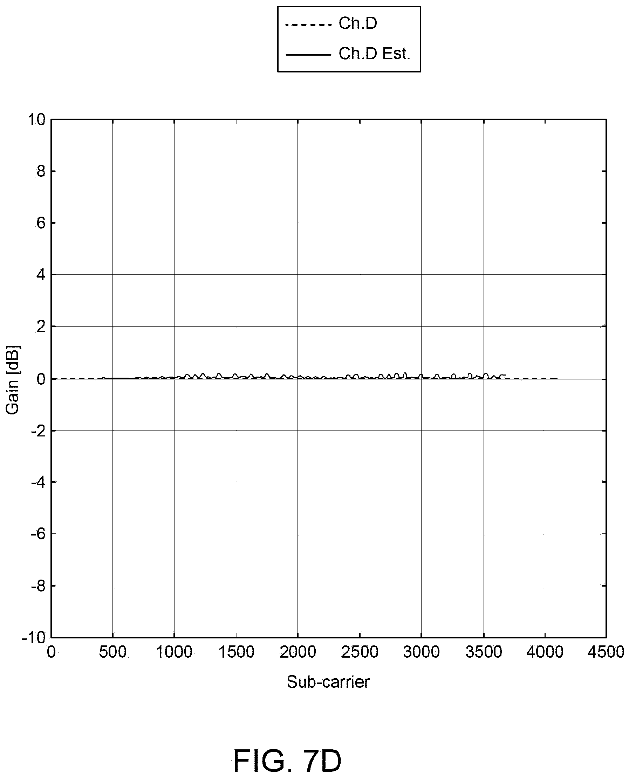

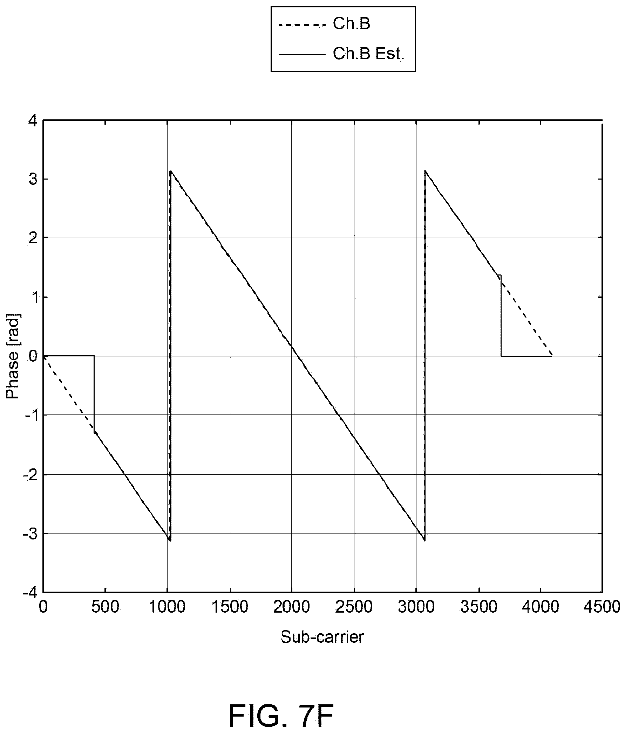

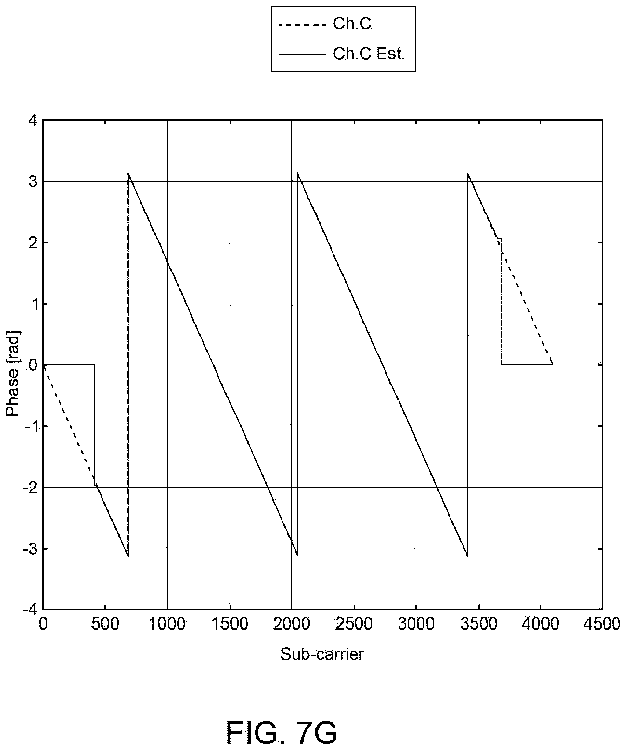

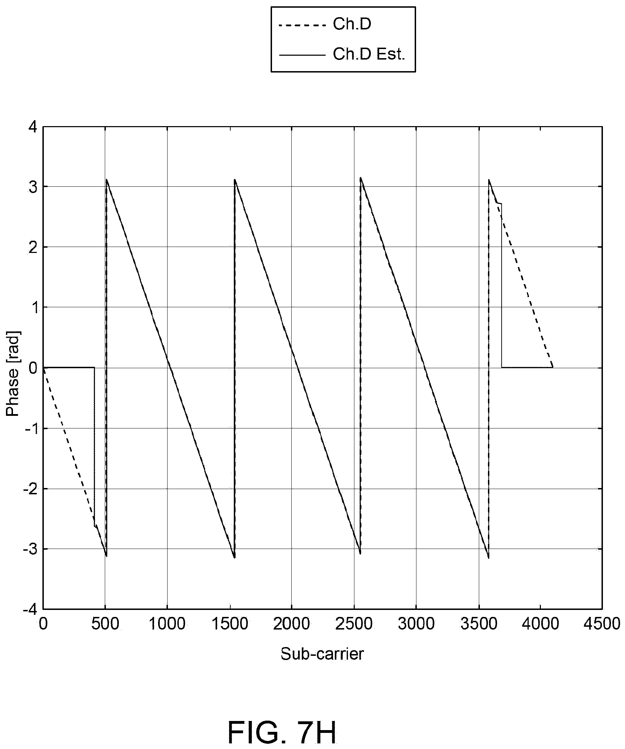

FIGS. 7A-7D provides another example of a channel set where each antenna channel is merely a delay of the other antenna, but all channels have the same gain of 1 (0 dB).
For FIGS. FIGS. 7A-7D
Time domain channel components (Gain = 1, delay only):

    cha = [0;1;0;0;0]
    chb = [0;0;1;0;0]
    chc = [0;0;0;1;0]
    chd = [0;0;0;0;1]

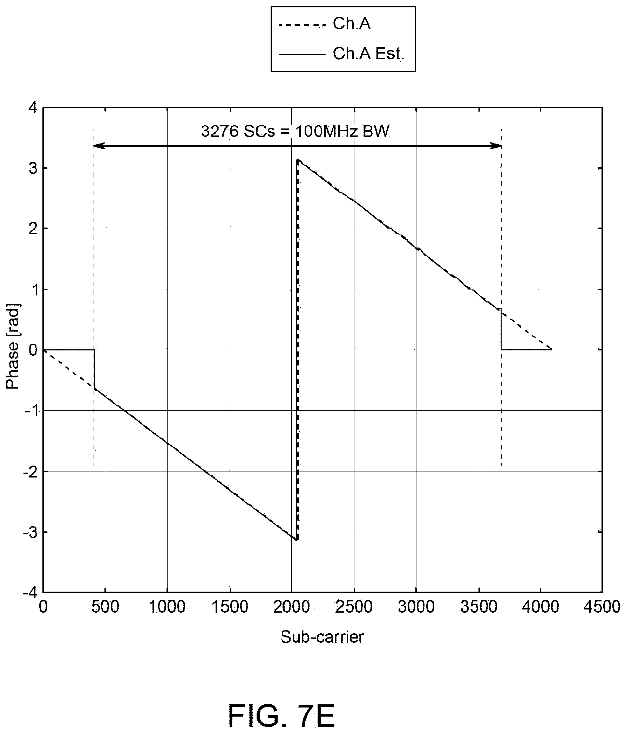

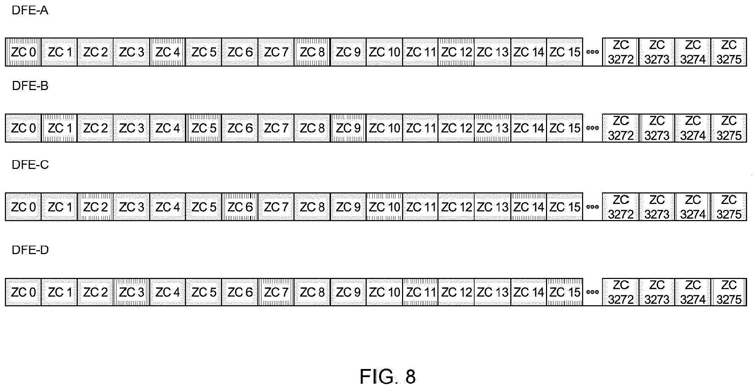

In this case, a linear curve-fitting smoothing approach can be applied as can be seen in FIGS. 7E-7H, mainly since the phase of each antenna channel is linear over the 100MHz BW.
Alternatively, given here is a method that divides the 3276-length FD ZC sequence to be interlaced in the 4 DFEs but it creates 4 new different sub-sequences. FIG. 8 describes the 100MHz BW FD 4-layer interlaced ZC Sequence.

In this method, the combined time-domain captured signal is equal to a single ZC sequence channel.

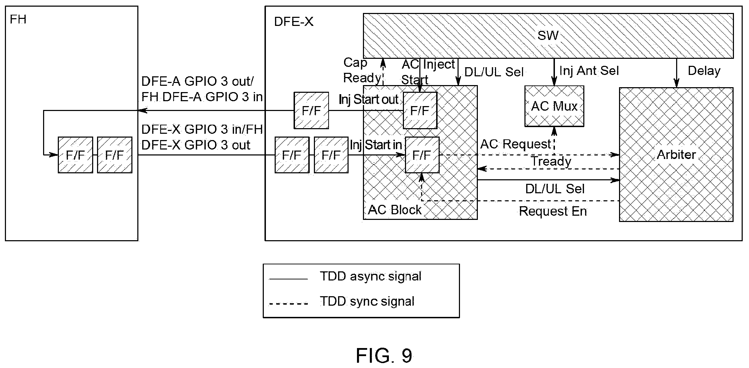

FH/DFE AC Control Diagram. FIG. 9 describes the diagram of the control signals that are responsible for the alignment between DFE FPGAs to activate a synchronization required for a successful Tx/Rx antenna calibration.

In FIG. 9, the control signals are divided into TDD synchronized and non-synchronized signals. The red line signals in FIG. 9 are non-synchronized, and the blue lines are synchronized control signals to the TDD timing. It is assumed that all the signals configured by the SW are non-synchronized to the TDD timing and they are red colored. The process starts when the SW configures the DFE FPGAs and sets the AC Inject Start signals. The alignment of the AC Inject Start is performed through the GPIO signals that are routed to/from each DFE FPGA from/to the FH FPGA. GPIO 3 is connected to/from DFE-X to the FH FPGA. Only DFE-A GPIO3 output is connected to the FH FPGA GPIO 3 input. Hence, it is required that DFE-A will be configured last with AC Inject Start signal set. Inside the FH FPGA, the GPIO 3 input is synchronized through two consecutive flip-flops. The output of the second flop-flop is connected to the FH GPIO 3 outputs to all DFE FPGAs including DFE-A. Inside each DFE FPGA, the GPIO 3 input signal that was sent from the FH, is synchronized again with 2 consecutive flip-flops (since the signal coming from the FH FPGA is routed through the board, it cannot be guaranteed that the slew rate supports 491.52MHz, hence, it is required to synchronize the signal both in the FH and the DFE FPGAs). The synchronized AC inject start signal in each DFE FPGA is then gated with the Request_En signal coming from the arbiter. The arbiter sets the Request_En signal in the beginning of the S-Slot (with and configured delay). The Request_En signal synchronizes the AC Inject start of all DFE FPGAs to the TDD. The TDD-Synced AC Inject Start in all DFEs generates the AC Inject Request to the Arbiter and the AC Mux block. After a SW-configured Delay cycles the Arbiter in each DFE FPGA sets the Tready signal to the AC Inject/Capture block. It is guaranteed that the Tready in all DFE FPGAs is set exactly in the same TDD cycle. Hence, all the DFE-FPGAs are now synced and ready to inject and capture assuming they have the same capture delays.

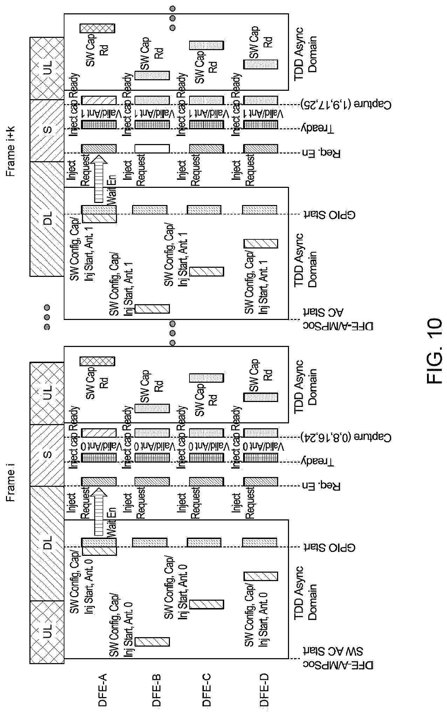

FIG. 10 describes the multi-DFE Tx antenna calibration timing diagram. The process starts by either the MPSoC or the DFE-A SW, which defines the antenna calibration configuration:

1. Tx/Rx calibration select
2. Tx/Rx antenna set select
3. Capture start
4. Capture Delay
5. Inject start

As stated above, DFE-A AC Inject Start should be set after setting all the other AC inject Start signals of the other 3 DFEs. Once the DFE-A AC inject Start is set, the signal goes to all the DFE FPGAs through GPIO 3 and sets all the Tx requests simultaneously once the Request_En signal is set by the Arbiter of each DFE FPGA. After a configured delay the Tready signal to the AC inject block is set by the arbiter. Once the Tready of the arbiter is set in all the DFE FPGAs (all are synchronized to the 491.52MHz sample), the DFE FPGAs start injecting to their corresponding PAs. The combined signal is then captured at DFE-A Antenna 0, and once done, the cap_ready signal is set for the SW. The SW keeps on waiting for cap_ready set right after the AC inject start is set. Once the SW processed the captured data and calculated the compensation coefficients (or even before, right after reading the captured data), it can start the next session of AC inject with another set of antennas, and so on, through all the 8 antenna sets.

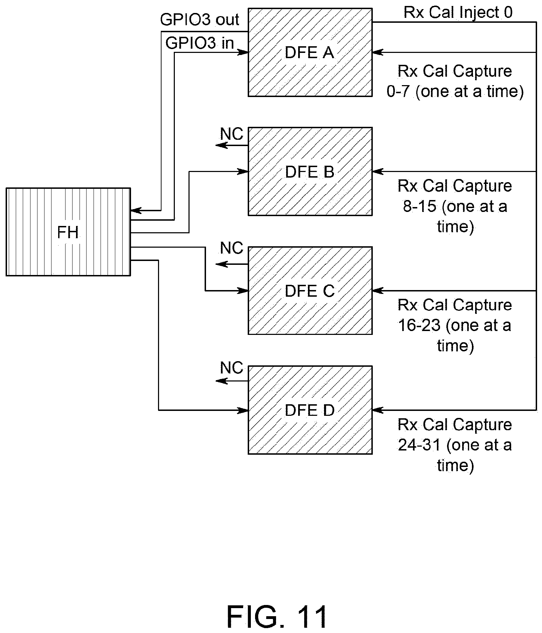

Multi-DFE Rx Calibration. FIG. 11 presents the multi-DFE Rx antenna calibration block diagram. As in the Tx antenna calibration case above, FIG. 11 shows that all the four DFE FPGAs are connected to the FH GPIO signals, where GPIO 3 output of DFE-A is connected to FH DFE-A GPIO3 input, and all the GPIO 3 inputs of the DFE FPGAs are connected to the FH FPGA four GPIO 3 outputs, one to each DFE FPGA. Also, it is shown in FIG. 11, that the Rx antenna calibration is performed simultaneously by all DFE FPGAs where it is guaranteed that all the DFE FPGAs are TDD aligned. The Rx Cal antenna scheduling will be done four antennas at a time, one from each DFE FPGA, the same as described above for the Tx antenna calibration. In this case, only antenna 0 of DFE-A is transmitting the ZC sequence and all the DFE FPGAs capture the same ZC sequence in their system. Hence, there is no need to separate between the antennas.

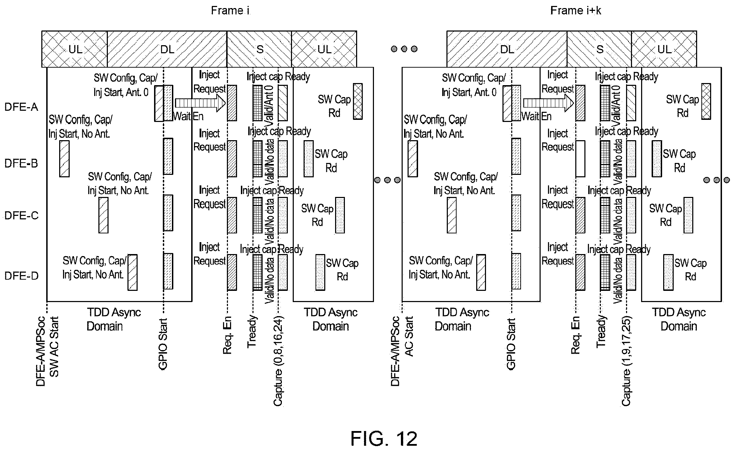

FIG. 12 describes the multi-DFE Rx antenna calibration timing diagram. The Rx antenna calibration schedule was already mostly described above, and it starts the same as the Tx antenna calibration process, by either the MPSoC or the DFE-A SW which defines the antenna calibration configuration explained above. As stated above, DFE-A AC Inject Start should be set after setting all the other AC inject Start of the other 3 DFEs. Once the DFE-A AC inject Start is set, the signal goes to all the DFE FPGAs through GPIO 3 and sets all the Tx inject requests simultaneously once the Request_En signal is set by the Arbiter of each DFE FPGA. Same as above, once the Tready of the arbiter is set in all the DFE FPGAs (all are synchronized to the 491.52MHz sample), the DFE FPGAs start injecting to their corresponding PAs. However, in the Rx antenna calibration case, all the DFE FPGAs except for DFE-A are configured with inject antenna num = 0 in the AC Mux which disables their ZC signal inject. The antenna 0 signal of DEF-A is captured at all DFE FPGAs and cap_ready signal is set for the SW by all the DFE FPGAs. The SW keeps on waiting for cap_ready to be set right after the AC inject start is set. Once the SW processed the captured data and calculated the compensation coefficients (or even before, right after reading the captured data), it can start the next round of AC inject with another set of antennas, and so on, through all the 8 antenna sets.

The following is the AC software orchestration description of the RU system and the corresponding switches and interface control.

There are four calibration related switches on the Midas board connected only to DFE A:

- Tx/Rx Antenna Calibration Select - Used to choose between Tx and Rx calibration
- Enable Antenna Calibration Switch - Used to choose whether the calibration feedback network signal is passed through
- Tx Antenna Calibration Switch - Selects whether the DFE A Tx0 output signal is sent to the calibration feedback network or to its PA (Power Amplifier)
- Rx Antenna Calibration Switch - Selects whether DFE A Rx0 receives the output of the calibration feedback network or its normal receiver path

The Tx/Rx Antenna Calibration Select switch does not need to be controlled in real time by the PL in DFE A. This switch can be set by the SW based on whether it intends to do a Tx or Rx calibration. The other three switches do need to be controlled in real time by the PL in DFE A as they must be synchronized with the TDD frame timing.

For a Tx calibration cycle data is injected from all four DFE FPGAs and combined through the calibration network to be received in DFE FPGA A and captured there for post-processing. For an Rx calibration cycle data is injected only from DFE FPGA A and split through the calibration network to be received in all four DFE FPGAs where it is captured for post-processing.

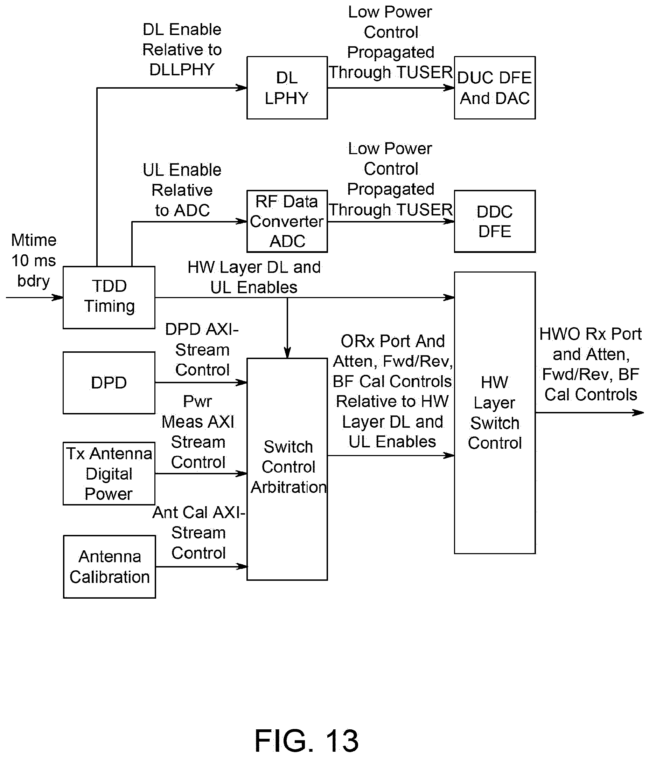

FPGA Internal Interface. Each DFE FPGA contains the blocks shown in FIG. 13. The antenna calibration switches as well as control of the ORx feedback and forward/reverse feedback switch are resources that must be shared by the blocks on the left: DPD (Digital Pre-Distortion), Tx Antenna Digital Power and Antenna Calibration. To manage this the FPGA has a Switch Control Arbitration block that receives requests from the three clients. These requests are managed using AXI-Streams from each of the clients where the TData and TValid are used to post a request to the arbitration block and the TReady is sent back to a client to grant its request. The Switch Arbitration Block is responsible for managing control of the external switches based on the client requests and the TDD frame timing allowing for settling time of the switches before granting access back to a client. Each client is responsible for notifying the Switch Arbitration Block when it is done with its individual process. Regarding the clients and TDD timing, the DPD and Tx Antenna Digital Power clients will share access during the downlink portion of the TDD frame while the Antenna Calibration client will only use the switches during the TDD guard period.

The DPD client runs autonomously during the downlink period and has highest priority as it will perform a capture of the transmitted data and ORx data and then go off and process the capture to perform PA linearization as it cycles its operations through each of the 8 antenna ports. The other two clients make requests on an as needed basis under the direction of DFE SW, which will write to registers within the client to initiate a request. Each client has a status that is polled by DFE SW to determine when the request operation is complete.

DFE FPGA SW Process. The Antenna Calibration block has a register set that needs to be programmed for each calibration cycle. The injection data programmed into a memory in the block only once for each 100 MHz / 4CC combination. The organization of this memory corresponds to the same four CC positions used in the DL LPHY block repeated 1024 times. The Zadoff-Chu sequence programmed into the memory can be 4096 samples long for a CC that has a sample rate of 122.88 MSPS, 2048 long for a CC that has a sample rate of 61.44 MSPS or 1024 long for a CC that has a sample rate of 30.72 MSPS. When multiple CCs occupy the same memory, they are interleaved the same as the TDM sequence from the DL LPHY is interleaved and the Zadoff-Chu sequence data is specific to the channel bandwidth of each CC. Since the Midas RU is required to support 200 MHz of OBW the DFE FPGA SW will have two potential sets of injection memory, one that matches the CC content of the first DL LPHY Subsystem and one that matches the CC content of the second DL LPHY Subsystem.

The selection of the CC that is transmitted and the Tx port that it is transmitted on is controlled by a set of four 16-bit masks, two in each DUC Subsystem. These mask registers are part of the DUC register space.

The overall calibration process is managed by the Fronthaul FPGA SW so prior to every calibration cycle each DFE FPGA will receive a message informing it the CC to be calibrated, the local port number (0 to 7) and whether the DFE FPGA should inject, capture or both. In response DFE SW will take the following steps:

1) If directed to inject data, check to which DL LPHY the CC to be calibration belongs. Reprogram the Antenna Calibration injection memory does not contain the proper injection set.

2) Program the four DUC injection mask registers in the two DUC Subsystems based on the active TDM positions for the CC to be injected and the Tx injection port. If the DFE FPGA is not injecting data, then all four DUC injection mask registers are set to zero. For the case where the DFE FPGA is injecting data the DUC injection mask registers are programmed based on the CC and Tx port targeted. The 16-bit TDM sequence for each DUC mask register is shown below. The CC positions used are determined by the DL LPHY / DUC bit sequence established when a CC is programmed. In each DUC Subsystem, the first 16-bit register's CC positions relate to DL LPHY0 CCs, and the second 16-bit register's CC positions relate to DL LPHY1 CCs. The four antenna ports shown correspond to Tx ports 0 through 3 for the first DUC Subsystem and to Tx ports 4 through 7 for the second DUC Subsystem. For example, if the injection is for Tx 4 for a DL LPHY0 CC that had a sample rate of 61.44 MSPS occupying CC positions 0 and 2 then the CC Position 0/Ant0 and CC Position 2/Ant0 bits would be set on the first DUC mask register in DUC Subsystem 1.

| CC Position 0 | | | | CC Position 1 | | | | CC Position 2 | | | | CC Position 3 | | | |
|---|---|---|---|---|---|---|---|---|---|---|---|---|---|---|---|
| Ant 0 | Ant 1 | Ant 2 | Ant 3 | Ant 0 | Ant 1 | Ant 2 | Ant 3 | Ant 0 | Ant 1 | Ant 2 | Ant 3 | Ant 0 | Ant 1 | Ant 2 | Ant 3 |

3) Program the other fields of the Antenna Calibration module that control injection and capture and then start the calibration cycle, which will send a request to the Switch Arbitration block.

4) Send an acknowledgement message back to the Fronthaul FPGA that the calibration setup is complete.

5) The Antenna Calibration module will perform the injection and capture once it is triggered by the Switch Control Arbitration. The DFE FPGA SW should poll the enable bit within the Antenna Calibration module as the When the injection/capture is complete the module will clear the enable.

6) If the DFE FPGA has been targeted to capture the SW downloads the data from the Antenna Calibration module's capture memory.

7) The DFE FPGA SW sends a message back to the Fronthaul FPGA that the calibration cycle is complete.

At this point, the DFE FPGA SW can start processing the captured data relative to the data that was injected in the background. Note that even if the DFE FPGA did not inject data it would have the information from the calibration cycle request what data was injected from a separate DFE FPGA based on the CC requested. The SW will derive the amplitude and phase compensation per subcarrier necessary to tune out the relative error for each CC. The details of this processing and programming of the compensation memory within the DL and UL LPHY blocks are not covered in this document. The DFE FPGA SW may be directed by the Fronthaul FPGA SW to send its calibration data processing results to another DFE FPGA. This would be the case for a Tx calibration cycle performed within DFE A

The next calibration cycle is started when the DFE FPGA receives the next calibration cycle request from the Fronthaul FPGA.

Fronthaul FPGA SW Process. The Fronthaul FPGA SW has the responsibility of coordinating the entire calibration process across all 32 Tx and Rx ports. The process is managed in units of calibration cycles, where each calibration cycle performs a Tx or Rx calibration on four ports, one per DFE FPGA. The Fronthaul FPGA SW performs the following steps:

1) The Fronthaul FPGA SW maintains a calibration timer so that the entire calibration process over the 32 Tx and Rx ports is performed every N seconds. The value of N will be smaller at powerup and then larger after initial calibrations are performed. Each time this calibration timer expires the Fronthaul FPGA SW initiates the calibration process.

2) The selection of ports used for a particular calibration cycle does not matter but the Fronthaul FPGA will start each calibration cycle by sending a start calibration message to each DFE FPGA. The sequence of messages is important and should be handled in the following manner:

a) Send a message to DFE FPGA A to indicate whether the calibration cycle is a Tx or Rx calibration cycle. DFE FPGA A will control the Tx/Rx Calibration Select switch through an FPGA register as this switch does not require real time control.

b) Send a calibration start message to DFE FPGAs B, C and D

c) The DFE FPGAs will set up the calibration cycle on their individual devices and each will reply to the Fronthaul FPGA with an acknowledgement that they have completed the setup.

d) After receiving calibration start acknowledgment messages from DFE FPGAs B, C and D the Fronthaul FPGA SW sends a calibration start message to DFE FPGA A, which starts the entire calibration cycle in the hardware. DFE FPGA A will send a calibration start acknowledgement message back to the Fronthaul FPGA as well.

e) The Fronthaul FPGA SW then waits to receive a calibration complete message from each of the four DFE FPGAs. Once it receives a message from all four DFE FPGAs, the calibration cycle is complete.

3) The Fronthaul FPGA SW continues to run through calibration cycles until it has covered all allocated CCs on all 32 ports in both the Tx and Rx direction.

4) After completion of the calibration process for all ports and CCs the calibration process goes to sleep and waits for the next expiration of the calibration process timer.

Each calibration cycle captures calibration data for 4 Tx or Rx ports, one on each DFE FPGA. The most sensible sequence would be to start with either Tx or Rx and run through all 32 ports in one direction for a particular CC. The first calibration cycle would start with the DFE FPGA's local Tx0 on each DFE FPGA (i.e., Tx ports 0, 8, 16 and 24), the next local Tx1 (i.e., Tx ports 1, 9, 17, 25), etc. The reason for using this order is to minimize the need for the DFE FPGAs to rewrite their injection memory. The only time it would need to perform a rewrite of the injection memory would be when it needs to change from a CC that is associated with one DL LPHY to a CC associated with the other DL LPHY.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

**Claims**

1.   A method for Parallel-Processing Multi-Antenna Calibration (PPMAC) for massive Multi-Input Multi-Output (mMIMO) antennas in a 5G New Radio (NR) next generation NodeB (gNB) system, the method comprising the steps of:

   providing a plurality of digital front-end units (DFEs), each of the plurality of DFEs includes an antenna calibration block having an internal memory and a plurality of associated antennas used in a 5G NR gNB, each antenna connected to a port;
   connecting each of the plurality of DFEs in parallel with each other;
   each of the antenna calibration blocks injecting a Zadoff-Chu (ZC) sequence from the calibration blocks internal memory into respective waveforms in a calibration feedback network to form network-affected ZC sequences;
   the calibration feedback network returning the network-affected ZC sequences to a designated receiver port;
   capturing the network-affected ZC sequences with the calibration block in one or more of the plurality of DFEs after a programmed delay; and
   determining phase offsets between antenna ports in both the transmit (Tx) and receive (Rx) directions based on the network-affected ZC sequences.

2.   The method of claim 1, further comprising the steps of:

   applying a Hadamard code on top of the network-affected ZC sequences; and
   simultaneously injecting the network-affected ZC sequences to a subset of the plurality of associated antennas with each DFE.

3.   The method of claim 2, wherein the Hadamard code that is applied on the parallel injecting multi-antennas converts the network-affected ZC sequences to P orthogonal ZC-Hadamard sequences that are decodable and separable from the captured ZC-Hadamard sequence.

4.   The method of claim 3, wherein

   the plurality of DFEs comprises a first, second, third and fourth DFE; and
   the plurality of associated antennas with each antenna calibration block is eight;
   wherein the plurality of antennas are grouped into eight sets with one antenna per DFE in each set for a total of four antennas per set.

**5.** The method of claim 4, wherein each of the DFEs comprises a field programmable gate array (FPGA).

**6.** The method of claim 4, wherein calibration of all antenna sets is performed periodically in both the Tx and Rx directions.

**7.** The method of claim 6, wherein the calibration blocks perform the injection and capture during a Time Division Duplex (TDD) guard period between Tx and Rx simultaneously per antenna set in the Tx or Rx direction.

**8.** The method of claim 7, wherein the plurality of DFEs are coupled to a fronthaul field programmable gate array (FH FPGA), which is adapted to send and receive data and compensated values over an inter-FPGA Ethernet connection to the plurality of DFEs.

**9.** The method of claim 8,

wherein the FH FPGA and each of the first, second, third and fourth DFE comprises a GPIO3 in, and a GPIO3 out;
wherein the FH FPGA GPIO3 out is connected to each of the first, second, third and fourth DFE GPIO3 in;
wherein the FH FPGA GPIO3 in is connected to the first DFE GPIO3 out; and
wherein each of the second, third and fourth DFE GPIO3 out are not connected.

**10.** The method of claim 9, wherein calibration is managed by the FH FPGA such that, prior to each calibration cycle, each DFE will receive a message relating to: the Carrier Components (CC) to be calibrated, a local port number for the DFE, and whether the DFE should inject, capture or both.

**11.** The method of claim 7, wherein each DFE applies the same network-affected ZC sequence to each antenna set.

**12.** The method of claim 11, wherein the Hadamard code comprises a 4x4 Hadamard matrix that is applied simultaneously to each antenna set.

**13.** The method of claim 12, further comprising the steps of:

converting the network-affected ZC sequences for each antenna set to Time-Domain; and
saving Time-Domain converted network-affected ZC sequences in corresponding AC Inject/Capture blocks.

**14.** The method of claim 13, further comprising the step of:
applying a smoothing function (f) on an output of each antenna calibration channel estimation, to reduce a noise component contribution and increase quality and accuracy of the channel estimation of each antenna in a set.

**15.** The method of claim 1, wherein the antennas are aligned and equalized in terms of gain, delay, and phase for both Tx and Rx.

FIG. 1

FIG. 2

|←——————————————————————— 5ms ———————————————————————→|

| Subframe 0 | Subframe 1 | Subframe 2 | Subframe 3 | Subframe 4 |
|:---:|:---:|:---:|:---:|:---:|
| Slot 0   Slot 1 | Slot 2   Slot 3 | Slot 4   Slot 5 | Slot 6   Slot 7 | Slot 8   Slot 9 |
| D   D | D   D | D   D | D   S | U   U |

GP

FIG. 3

FIG. 4

EP 4 475 463 A1

DFE-A

| 1 | 1 | 1 | 1 | 1 | 1 | 1 | 1 | 1 | 1 | 1 | 1 | 1 | 1 | 1 | 1 | | 1 | 1 | 1 | 1 |
|---|---|---|---|---|---|---|---|---|---|---|---|---|---|---|---|---|---|---|---|---|
| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ooo | ZC 3272 | ZC 3273 | ZC 3274 | ZC 3275 |

DFE-B

| 1 | -1 | 1 | -1 | 1 | -1 | 1 | -1 | 1 | -1 | 1 | -1 | 1 | -1 | 1 | -1 | | 1 | -1 | 1 | -1 |
|---|---|---|---|---|---|---|---|---|---|---|---|---|---|---|---|---|---|---|---|---|
| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ooo | ZC 3272 | ZC 3273 | ZC 3274 | ZC 3275 |

DFE-C

| 1 | 1 | -1 | -1 | 1 | 1 | -1 | -1 | 1 | 1 | -1 | -1 | 1 | 1 | -1 | -1 | | 1 | 1 | -1 | -1 |
|---|---|---|---|---|---|---|---|---|---|---|---|---|---|---|---|---|---|---|---|---|
| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ooo | ZC 3272 | ZC 3273 | ZC 3274 | ZC 3275 |

DFE-D

| 1 | -1 | -1 | 1 | 1 | -1 | -1 | 1 | 1 | -1 | -1 | 1 | 1 | -1 | -1 | 1 | | 1 | -1 | -1 | 1 |
|---|---|---|---|---|---|---|---|---|---|---|---|---|---|---|---|---|---|---|---|---|
| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ooo | ZC 3272 | ZC 3273 | ZC 3274 | ZC 3275 |

FIG. 5

FIG. 6A

FIG. 6B

EP 4 475 463 A1

FIG. 6C

21

FIG. 6D

FIG. 6E

FIG. 6F

FIG. 6G

FIG. 6H

FIG. 7A

FIG. 7B

FIG. 7C

FIG. 7D

FIG. 7E

FIG. 7F

FIG. 7G

FIG. 7H

DFE-A

| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ●●● | ZC 3272 | ZC 3273 | ZC 3274 | ZC 3275 |

DFE-B

| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ●●● | ZC 3272 | ZC 3273 | ZC 3274 | ZC 3275 |

DFE-C

| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ●●● | ZC 3272 | ZC 3273 | ZC 3274 | ZC 3275 |

DFE-D

| ZC 0 | ZC 1 | ZC 2 | ZC 3 | ZC 4 | ZC 5 | ZC 6 | ZC 7 | ZC 8 | ZC 9 | ZC 10 | ZC 11 | ZC 12 | ZC 13 | ZC 14 | ZC 15 | ●●● | ZC 3272 | ZC 3273 | ZC 3274 | ZC 3275 |

FIG. 8

**FIG. 9**

FIG. 10

GPIO3 out

GPIO3 in

Rx Cal Inject 0

DFE A

Rx Cal Capture
0-7 (one at a time)

NC

DFE B

Rx Cal Capture
8-15 (one at a
time)

FH

NC

DFE C

Rx Cal Capture
16-23 (one at a
time)

NC

DFE D

Rx Cal Capture
24-31 (one at a
time)

FIG. 11

FIG. 12

FIG. 13

Europäisches
Patentamt

European
Patent Office

Office européen
des brevets

# EUROPEAN SEARCH REPORT

Application Number

EP 24 18 0878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/067608 A1 (SHIM SEIJOON [KR] ET AL) 27 February 2020 (2020-02-27)<br>* paragraph [0010] *<br>* paragraph [0034] - paragraph [0037] *<br>* paragraph [0045] - paragraph [0047] *<br>* paragraph [0050] *<br>* paragraph [0057] - paragraph [0065] *<br>* paragraph [0073] *<br>* paragraph [0081] - paragraph [0083] *<br>* paragraph [0087] - paragraph [0088] *<br>* figures 2, 5 * | 1-15 | INV.<br>H04B17/00<br>H04B17/21<br>H04B7/06<br>H04L5/00 |
| X<br><br>Y | EP 3 496 302 B1 (SAMSUNG ELECTRONICS CO LTD [KR]) 23 December 2020 (2020-12-23)<br>* paragraph [0002] - paragraph [0004] *<br>* paragraph [0008] *<br>* paragraph [0053] - paragraph [0058] *<br>* figure 2 *<br>* paragraph [0070] - paragraph [0078] *<br>* paragraph [0092] - paragraph [0093] * | 1-15<br><br>1-15 | |
| Y | TRAN MANH ET AL: "Real-time Calibration for Digital Beamforming in 5G Systems With Experiments on Testbed",<br>2022 INTERNATIONAL CONFERENCE ON ADVANCED TECHNOLOGIES FOR COMMUNICATIONS (ATC), IEEE,<br>20 October 2022 (2022-10-20), pages 49-53, XP034227928,<br>DOI: 10.1109/ATC55345.2022.9943013<br>[retrieved on 2022-11-15]<br>* section I *<br>* section II.A;<br>figure 2 * | 1-15 | TECHNICAL FIELDS SEARCHED (IPC)<br><br>H04B<br>H04L |

The present search report has been drawn up for all claims

| Place of search | Date of completion of the search | Examiner |
|---|---|---|
| The Hague | 16 October 2024 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0878

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2024

| Patent document cited in search report | | Publication date | Patent family member(s) | | Publication date |
|---|---|---|---|---|---|
| US 2020067608 | A1 | 27-02-2020 | KR | 20180074542 A | 03-07-2018 |
| | | | US | 2020067608 A1 | 27-02-2020 |
| EP 3496302 | B1 | 23-12-2020 | CN | 109690981 A | 26-04-2019 |
| | | | EP | 3496302 A1 | 12-06-2019 |
| | | | KR | 20180029536 A | 21-03-2018 |
| | | | US | 2019207309 A1 | 04-07-2019 |
| | | | WO | 2018048285 A1 | 15-03-2018 |

EPO FORM P0459

For more details about this annex : see Official Journal of the European Patent Office, No. 12/82